# EUROPÄISCHE PATENTSCHRIFT

(11) **EP 0 757 185 B1**
(45) Veröffentlichungstag und Bekanntmachung des Hinweises auf die Patenterteilung: **19.04.2000**
(21) Anmeldenummer: 96110564.0
(22) Anmeldetag: 29.06.1996
(51) Int. Cl.: F16B 13/12

(54) **Schlaganker**
Anchor expanded by impact
Cheville à noyau d'expansion

(30) Priorität: 04.08.1995 DE 19528675
(43) Veröffentlichungstag der Anmeldung: 05.02.1997
(73) Patentinhaber: fischerwerke Artur Fischer GmbH & Co. KG, 72178 Waldachtal (DE)
(72) Erfinder: Mäder, Eberhard, 72184 Eutingen-Göttelfingen (DE); Mallée, Rainer, 72178 Waldachtal (DE); Schedler, Gerd, 72178 Waldachtal (DE); Striebich, Jürgen, 72160 Horb (DE)

(56) Entgegenhaltungen:
- DE-A- 3 446 158
- FR-A- 2 273 968
- FR-A- 2 708 057
- US-A- 1 372 035
- US-A- 1 601 796
- US-A- 1 821 401
- PATENT ABSTRACTS OF JAPAN vol. 013, no. 560 (M-906), 13.Dezember 1989 & JP 01 234610 A (KAYOU KOGYO KK), 19.September 1989,

## Beschreibung

Die Erfindung betrifft einen Schlaganker, bestehend aus einer teilweise geschlitzten Metallhülse und einem in die Metallhülse eintreibbaren Spreizkörper, gemäß der Gattung des Anspruches 1.

Die bekannten Schlaganker der obengenannten Art (DE-U 76 12 316, DE-U 76 36 399) sind in der Regel aus einem Vollmaterial hergestellt, in das ein Innengewinde eingebracht ist, dessen Kernbohrung sich zum vorderen Ende hin konisch verjüngt. In diese Kernbohrung ist ein Spreizkörper eingesetzt, der mit einem Einschlagwerkzeug zur Aufspreizung des Schlagankers in die sich verengende Bohrung eingetrieben wird. Im Bereich der sich verengenden Bohrung weist der Schlaganker Längsschlitze zur Bildung von Spreizschenkeln auf. Üblicherweise werden die bekannten Schlaganker aus Vollmaterial hergestellt, wobei die Bohrung mit Innengewinde und die Schlitze durch spanabhebende Arbeitsverfahren erstellt werden. Es gab auch schon Versuche, den Schlaganker in der Weise auszubilden, daß eine Herstellung in einem Stanz-/Biegeverfahren möglich ist. Ein solcher Schlaganker ist beispielsweise aus der DE-U 74 24 831 bekannt. Bei diesem Schlaganker ist die sich verjüngende Innenbohrung durch Einprägungen gebildet, die so angeordnet sind, daß in den Innenflächen der durch die Längsschlitzung sich ergebenden Spreizschalen im Abstand zueinander stehende Querrippen entstehen, deren Höhe von Rippe zu Rippe zum Einführende hin zunimmt. Bei hohen Spreizdruckkräften verformen sich jedoch die Einprägungen, so daß sich die durch den Spreizkörper aufgebrachten Spreizkräfte nicht in entsprechende Haltekräfte des Schlagankers umsetzen. Der bekannte Schlaganker ist daher für Verankerungen in hochfesten Materialien, wie beispielsweise Beton, nicht geeignet.

Der Erfindung liegt die Aufgabe zugrunde, einen gattungsgemäßen Schlaganker in der Weise auszubilden, daß er kostengünstig in einem spanlosen Arbeitsverfahren herstellbar ist, jedoch die hohen Auszugswerte eines aus Vollmaterial hergestellten Schlagankers besitzt.

Die Lösung dieser Aufgabe wird durch die im Anspruch 1 angegebenen Merkmale erreicht.

Zur Herstellung des Schlagankers wird zunächst in einem Stanz- und Biegewerkzeug aus einem Blechstreifen die Kontur der Abwicklung der Metallhülse ausgestanzt, wobei die beiden den Spreizschenkel bildenden Abschnitte zunächst in axialer Richtung aneinanderhängen. In weiteren Folgen im Biegewerkzeug werden die Gewindegänge eingeprägt und der zweite Abschnitt des Spreizschenkels auf den ersten Abschnitt aufgebogen. Um die beiden Abschnitte verschiebefest miteinander zu verbinden, kann beispielsweise von der Außenfläche des zweiten Abschnittes ausgehend ein Prägepunkt gesetzt werden, der sich in die Außenfläche des ersten Abschnittes eindrückt. In weiteren Folgen wird dann die Blechplatine zu einer Hülse gerollt und ggf. mit einer Zapfenverbindung an der Nahtstelle verbunden. Durch Kalibrieren der die doppelte Wandstärke aufweisenden Spreizschenkel auf einen durchgehend gleichen Durchmesser ergibt sich zwangsläufig eine Einbiegung des ersten Abschnittes der Spreizschenkel, so daß eine sich verengende Innenbohrung entsteht. In diese sich verengende Innenbohrung kann nun ein Spreizkörper zur Aufspreizung des Schlagankers eingetrieben werden. Die durch die beiden aufeinanderliegenden Abschnitte gebildete Verdickung der Spreizschenkel ermöglicht ein Aufspreizmaß, das der doppelten Wandungsdicke der Hülse entspricht.

Um dieses Aufspreizmaß in Auszugskraft umzusetzen, ist es entsprechend der Erfindung erforderlich, daß die beiden aufeinanderliegenden Abschnitte verschiebefest miteinander verbunden sind. Ohne eine solche Verbindung würde der umgefaltete zweite Abschnitt des Spreizschenkels an der Biegestelle vom ersten Abschnitt schon bei einer geringeren Zugkraft abgeschert, die ansich durch die Aufspreizung über die doppelte Wandstärke der Spreizschenkel erreichbar wäre. Durch die verschiebefeste Verbindung der beiden Abschnitte, beispielsweise über einen Prägepunkt, Schweißpunkt oder durch Querrippen gebildeten Verzahnung, wird die auf die Biegestelle wirkende Scherkraft reduziert. Damit kann die Auszugskraft bis zum Abscheren erheblich erhöht und damit die Aus der FR-A-2 708 057 ist ein Schlaganker bekannt, der aus einer ein Innengewinde zum Eindrehen einer Schraube aufweisenden und zur Bildung von Spreizschenkeln teilweise geschlitzten Metallhülse mit zunächst zylindrischer und dann im Bereich des zum Spreizen vorgesehenen Teils sich zum vorderen Ende hin verjüngender Bohrung besteht. Die Metallhülse ist aus einer Blechplatine gestanzt und anschließend zu einer Hülse gerollt, wobei die Spreizschenkel einen nach innen eingebogenen ersten Abschnitt aufweisen, auf dessen Außenfläche ein zweiter Abschnitt umgebogen ist. Dadurch entsteht eine Verengung, in die zur Aufspreizung des Schlagankers ein Spreizkörper eintreibbar ist. Bei einer an der Schraube angreifenden und über das Gewinde der Hülse auf den inneren Abschnitt übertragenen Zugbelastung ergibt sich eine axiale Verschiebung zwischen den beiden Abschnitten, die schon bei geringen Zugkräften zu einem Abscheren der beiden Abschnitte an der Biegestelle führt. Da außerdem im Bereich des Gewindes keine schubfeste Verbindung an der Nahtstelle der Hülse vorhanden ist, kann auch die Schraubverbindung keine hohen Zugkräfte übertragen.

Das aus der US-A-1 372 035 bekannte Befestigungselement betrifft einen Schraubdübel, der durch Eindrehen einer Schraube in den ein Innengewinde aufweisenden und sich verengenden Spreizteil des Dübels aufgespreizt wird. Die Verengung des Gewindes wird durch Umfalten eines äußeren Abschnittes auf einen inneren Abschnitt des Spreizteiles erzielt, wobei die Gewindeform in beiden Abschnitten eingeprägt ist. Bei einer an der Schraube angreifenden Zugkraft wird diese aus der Hülse gezogen, so dass eine axiale Verschiebung zwischen dem Gewinde der Hülse und dem Gewinde der Schraube eintritt. Bei dieser axialen Verschiebung werden die Gewindegänge plattgedrückt, so dass zumindest beim Belastungszustand keine Kraftübertragung zwischen dem inneren und dem äußeren Abschnitt stattfindet. Da sich außerdem das Gewinde im geschlitzten Bereich der Hülse befindet, wird bei einer an der Schraube angreifenden Zuglast der Spreizteil durch das Gewinde radial aufgedehnt, so dass schon bei geringer Belastung die Schraube aus dem Spreizteil ausgezogen wird.

Haltekraft des Dübels gesteigert werden. Mit dem erfindungsgemäßen Schlaganker sind die gleichen Haltewerte wie aus Vollmaterial hergestellten Schlagankern erreichbar, wobei jedoch die Herstellkosten durch die spanlose Fertigung in einem Stanz- und Biegewerkzeug erheblich geringer sind.

Um eine sich gleichmäßig verjüngende Innenbohrung zu erhalten, ist es zweckmäßig, die Innenfläche des auf dem ersten Abschnitt aufliegenden zweiten Abschnitts mit einer dem Einbiegewinkel des ersten Abschnittes entsprechenden Fase zu versehen.

Weitere zweckmäßige Ausgestaltungen ergeben sich aus den Unteransprüchen und der Beschreibung.

In der Zeichnung sind Ausführungsbeispiele der Erfindung dargestellt.

Es zeigen:
- Figur 1: den Schlaganker mit eingesetztem Spreizstift,
- Figur 2: die Kontur des Stanzteiles,
- Figur 3: die Verbindung der beiden Abschnitte des Spreizschenkels über einen Schweißpunkt und
- Figur 4: die Verbindung der beiden Abschnitte des Spreizschenkels über eine durch Querrippen gebildete Verzahnung.

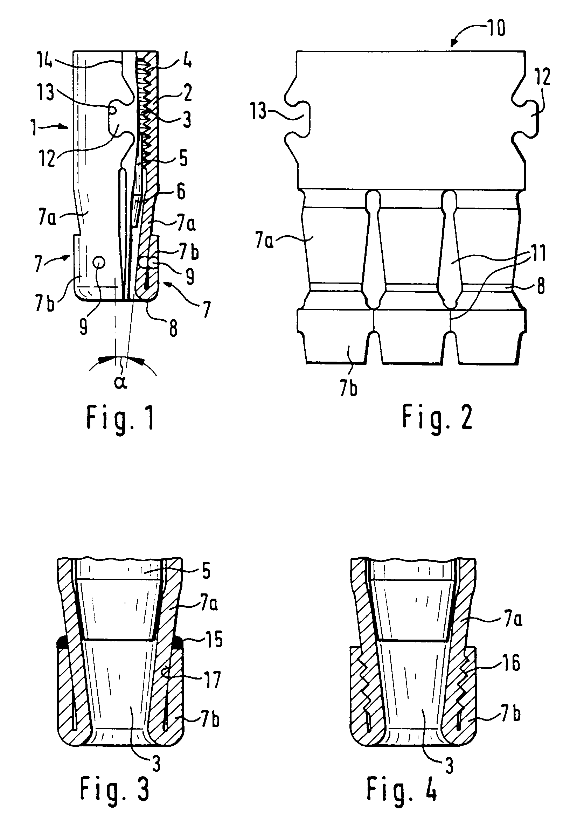

Der in Figur 1 dargestellte Schlaganker 1 besteht aus einer Metallhülse 2 mit einer durchgehenden, zunächst zylindrischen und dann im Bereich des zum Spreizen vorgesehenen Teils sich zum vorderen Ende hin konisch verjüngenden Bohrung 3. Im hinteren Bereich der Bohrung 3 ist ein Innengewinde 4 vorgesehen. In der Bohrung 3 ist ein Spreizkörper 5 eingesetzt, der einen zylindrischen Abschnitt und daran anschließend einen sich zum vorderen Ende hin verjüngenden Kegelstumpf 6 aufweist.

Die Verjüngung der Bohrung 3 im Anschluß an das Innengewinde 4 wird dadurch erreicht, daß die Spreizschenkel 7 nach innen eingebogen sind, wobei die Innenflächen der Spreizschenkel zur Mittelachse des Schlagankers etwa einen Einbiegewinkel α von 5 - 7° bilden. Auf die Außenfläche des ersten Abschnittes 7a der Spreizschenkel 7 ist ein zweiter Abschnitt 7b in der Weise umgefaltet, daß die Außenfläche des zweiten Abschnittes 7b nach dem Umfalten etwa den gleichen Außendurchmesser wie der Schlaganker im Bereich des Innengewindes aufweist. Durch das Umfalten wird ein Spreizbereich gebildet, der der doppelten Wandungsstärke der Hülse 2 entspricht. Um ein Abscheren der beiden Abschnitte 7a, 7b an der Biegestelle 8 bei hohen Auszugskräften zu verhindern, sind die beiden Abschnitte schubfest durch einen Prägepunkt 9 miteinander verbunden.

Die Herstellung der Metallhülse 2 erfolgt in einem Stanz- und Biegewerkzeug, in dem zunächst die in Figur 2 dargestellte Stanzkontur 10 ausgestanzt wird. In weiteren Folgen wird dann der Abschnitt 7b auf die Außenfläche des Abschnittes 7a zur Bildung des Spreizschenkels 7 an der Biegestelle 8 umgefaltet. Die Abschnitte 7a, 7b sind voneinander durch einen Schlitz 11 getrennt. Gleichzeitig erhält der Abschnitt 7a eine leicht konische Kontur, um beim anschließenden Zusammenrollen der Platine zu der Hülse 2 die Einbiegung des Abschnittes 7a entsprechend dem Winkel a zu ermöglichen. Beim Zusammenrollen wird die Hülse 2 durch den an der einen Längskante angeordneten Zapfen 12 und der an der anderen Längsseite angeordneten Ausnehmung 13 an der Nahtstelle 14 verbunden. Durch die beiden Schlitze 11 und der Nahtstelle 14 werden bei dem dargestellten Ausführungsbeispiel nach dem Rollen drei Spreizschenkel gebildet.

Das Innengewinde 4 kann entweder nach dem Zusammenrollen eingeschnitten oder durch Prägung der Gewindegänge im Stanz- und Biegewerkzeug hergestellt werden. Auch der Prägepunkt 9 kann entweder nach dem Rollen der Hülse oder bereits nach dem Umfalten der beiden Abschnitte 7a, 7b eingebracht werden.

Figur 3 zeigt eine Ausführung, bei der die schubsichere Verbindung zwischen dem Abschnitt 7a und 7b über einen Schweißpunkt 15 erreicht wird. In Figur 4 erfolgt die schubfeste Verbindung über eine Verzahnung, die durch ineinandergreifende Querrippen 16 an der Außenfläche des Abschnittes 7a und an der umgefalteten Innenfläche des Abschnittes 7b gebildet ist. Um eine gleichmäßige Verjüngung der Bohrung 3 im Bereich der Spreizschenkel zu erreichen, weist die Innenfläche des umgefalteten Abschnittes 7b eine dem Einbiegewinkel a entsprechende Fase 17 auf.

## Patentansprüche

1. Schlaganker, bestehend aus einer ein Innengewinde (4) zum Eindrehen einer Schraube aufweisenden und zur Bildung von Spreizschenkeln teilweise geschlitzten Metallhülse mit durchgehender, zunächst zylindrischer und dann im Bereich des zum Spreizen vorgesehenen Teils sich zum vorderen Ende hin verjüngender Bohrung (3), in die zur Aufspreizung des Schlagankers (1) ein Spreizkörper (5) eintreibbar ist, wobei die Metallhülse aus einer Blechplatine gestanzt und anschließend zu einer Hülse gerollt ist und die Spreizschenkel (7) einen nach innen eingebogenen ersten Abschnitt (7a) aufweisen, auf dessen Außenfläche ein zweiter Abschnitt (7b) umgebogen ist, **dadurch gekennzeichnet,** dass die beiden aufeinanderliegenden Abschnitte (7a, 7b) und die Hülse (2) an ihrer Nahtstelle (14) schubfest miteinander verbunden sind.

2. Schlaganker nach Anspruch 1, **dadurch gekennzeichnet, daß** die beiden Abschnitte (7a, 7b) der Spreizschenkel (7) über einen Prägepunkt (9) miteinander verbunden sind.

3. Schlaganker nach Anspruch 1, **dadurch gekennzeichnet, daß** die beiden Abschnitte (7a, 7b) der Spreizschenkel (7) über einen Schweißpunkt (15) miteinander verbunden sind.

4. Schlaganker nach Anspruch 1, **dadurch gekennzeichnet, daß** die beiden Abschnitte (7a, 7b) der Spreizschenkel (7) über eine durch ineinandergreifende Querrippen (16) gebildete Verzahnung miteinander verbunden sind.

5. Schlaganker nach Anspruch 1, dadurch gekennzeichnet, daß die auf der Außenfläche des Abschnittes (7a) aufliegende Innenfläche des Abschnittes (7b) mit einer etwa dem Einbiegewinkel (α) des ersten Abschnittes (7a) entsprechenden Fase (17) versehen ist.

6. Schlaganker nach Anspruch 1, dadurch gekennzeichnet, daß der Einbiegewinkel (α) des ersten Abschnittes (7a) 5 - 7° beträgt.

## Claims

1. Impact-type anchor, consisting of a metal sleeve that has an internal thread (4) for the screwing in of a screw and is partially slit to form expansible legs, having a through bore (3) that is at first cylindrical and then in the region of the portion provided for expansion tapers towards the leading end, into which bore an expander body (5) can be driven to expand the impact-type anchor (1), the metal sleeve being stamped out of a sheet metal blank and then rolled up to form a sleeve and the expansible legs (7) having a first section (7a) that is bent inwards, onto the outer face of which first section there is bent round a second section (7b), characterized in that the two sections (7a, 7b) that rest one against the other and the sleeve (2) are connected to one another at their seam (14) so as to be shear-resistant.

2. Impact-type anchor according to claim 1, characterized in that the two sections (7a, 7b) of the expansible legs (7) are connected to one another by means of a punched point (9).

3. Impact-type anchor according to claim 1, characterized in that the two sections (7a,7b) of the expansible legs (7) are connected to one another by means of a spot weld (15).

4. Impact-type anchor according to claim 1, characterized in that the two sections (7a, 7b) of the expansible legs (7) are connected to one another by means of toothing that is formed by transverse ribs (16) that engage with one another.

5. Impact-type anchor according to claim 1, characterized in that the inner face of the section (7b) that rests against the outer face of the section (7a) is provided with a chamfer (17) that corresponds approximately to the angle (α) through which the first section (7a) bends inwards.

6. Impact-type anchor according to claim 1, characterized in that the angle (α) through which the first section (7a) bends inwards is of from 5 to 7°.

## Revendications

1. Elément d'ancrage à percussion, formé par une douille métallique, présentant un filetage intérieur (4) pour l'engagement d'une vis et partiellement fendue en vue de la formation de pattes expansibles, la douille étant traversée de part en part d'un trou (3) qui est d'abord cylindrique et se rétrécit ensuite, dans la zone de la partie prévue pour l'expansion, vers l'extrémité avant, trou dans lequel une pièce d'écartement (5) peut être enfoncée pour produire l'expansion de l'élément d'ancrage à percussion (1), la douille métallique étant formée par découpage d'un flan dans une feuille de tôle et enroulement consécutif du flan en une douille, et les pattes expansibles (7) présentant un premier tronçon (7a) incurvé vers l'intérieur et sur la face externe duquel est replié un second tronçon (7b), **caractérisé en ce** que les deux tronçons superposés (7a, 7b), ainsi que la douille (2) au droit de son joint (14), sont réunis par un assemblage résistant au cisaillement.

2. Elément d'ancrage à percussion selon la revendication 1, caractérisé en ce que les deux tronçons (7a, 7b) des pattes expansibles (7) sont réunis entre eux par une empreinte ponctuelle (9).

3. Elément d'ancrage à percussion selon la revendication 1, caractérisé en ce que les deux tronçons (7a, 7b) des pattes expansibles (7) sont réunis entre eux par un point de soudage (15).

4. Elément d'ancrage à percussion selon la revendication 1, caractérisé en ce que les deux tronçons (7a, 7b) des pattes expansibles (7) sont réunis entre eux par une denture formée par des nervures transversales (16) mutuellement imbriquées.

5. Elément d'ancrage à percussion selon la revendication 1, caractérisé en ce que la face interne du tronçon (7b), appliquée contre la face externe du tronçon (7a), est pourvue d'un chanfrein (17) correspondant à peu près à l'angle (α) d'incurvation vers l'intérieur du premier tronçon (7a).

6. Elément d'ancrage à percussion selon la revendication 1, caractérisé en ce que l'angle a d'incurvation vers l'intérieur du premier tronçon (7a) est de 5 - 7°.
